# EUROPÄISCHE PATENTSCHRIFT

(11) **EP 2 111 586 B1**
(45) Veröffentlichungstag und Bekanntmachung des Hinweises auf die Patenterteilung: **12.10.2016**
(21) Anmeldenummer: 08701374.4
(22) Anmeldetag: 10.01.2008
(51) Int. Cl.: G06F 15/16, G07C 5/08

(54) **EIN-CHIP-COMPUTER UND TACHOGRAPH**
SINGLE-CHIP COMPUTER AND TACHOGRAPH
ORDINATEUR MONOPUCE ET TACHYGRAPHE

(30) Priorität: 23.01.2007 DE 102007004280
(43) Veröffentlichungstag der Anmeldung: 28.10.2009
(73) Patentinhaber: Continental Automotive GmbH, 30165 Hannover (DE)
(72) Erfinder: GERBER, Rudolf, 78126 Königsfeld (DE); HARDINGE, Charles, 78052 Villingen-Schwenningen (DE); LANGE, Roland, 78086 Brigachtal (DE); LINDINGER, Andreas, 78658 Flözlingen (DE); ROMBACH, Gerhard, 78098 Triberg (DE)
(86) Internationale Anmeldenummer: PCT/EP2008/050218
(87) Internationale Veröffentlichungsnummer: WO 2008/090027

(56) Entgegenhaltungen:
- EP-A- 1 605 410
- WO-A-2004/068344
- DE-A1- 10 014 994

## Beschreibung

Die Erfindung betrifft einen Ein-Chip-Computer, insbesondere für eine Verwendung in einem Fahrzeug. Die Erfindung betrifft ferner einen Tachographen, insbesondere einen digitalen Tachographen.

In der DE 10 2004 028 338 A1 ist ein Tachograph offenbart, der Fahrzeugbetriebsdaten digital in einem Speicher speichert. Der Tachograph weist einen ersten Mikrocontroller mit einem Prozessorkern auf, der über einen Zwischenspeicher und eine Verschlüsselungseinheit, die in dem ersten Mikrocontroller angeordnet sind, mit einem extern zu dem ersten Mikrocontroller angeordneten Speicher gekoppelt ist. Der Mikrocontroller weist ferner einen internen Speicher und eine Sicherheitssensorik als integrale Bauelemente auf. Die Sicherheitssensorik überwacht mindestens einen sicherheitskritischen Umgebungsparameter. Der erste Mikrocontroller steht mit einem zweiten Mikrocontroller in Verbindung. Der zweite Mikrocontroller steht mit einem Bediensystem oder einem Anzeigesystem in Verbindung und steuert das Anzeigesystem oder die Funktion der Bedienelemente.

Aus DE 100 14 994 A1 sind eine Vorrichtung und ein Verfahren zur Speicherung und/oder Auswertung von Daten in einem Speicher in einem Fahrzeug, wobei die Daten über einen Datenbus im Fahrzeug übertragen werden, bekannt. Ein Rechnersystem in einem Fahrzeug, welches wenigstens zwei Rechner aufweist, offenbart WO 2004/068344 A1.

Die Aufgabe der Erfindung ist, einen Ein-Chip-Computer und einen Tachographen zu schaffen, der sicher und leistungsfähig ist.

Die Aufgabe wird gelöst durch die Merkmale der unabhängigen Patentansprüche. Vorteilhafte Weiterbildungen der Erfindung sind in den Unteransprüchen gekennzeichnet.

Gemäß eines ersten Aspekts zeichnet sich die Erfindung aus durch einen die Merkmale des Anspruchs 1 aufweisenden Ein-Chip-Computer.

Der mindestens eine zweite Prozessorkern ist vorgesehen für ein Ausführen mindestens eines kryptographischen oder anderen sicherheitsrelevanten Programms. Zu diesem Zweck kann dem mindestens einen zweiten Prozessorkern auch mindestens ein Koprozessor zugeordnet sein zum kryptographischen Verarbeiten von Daten oder kann der mindestens eine zweite Prozessorkern mindestens einen solchen Koprozessor umfassen. Ferner kann dem mindestens einen zweiten Prozessorkern ein sicherer Speicher zugeordnet sein, insbesondere ein sicherer Schlüsselspeicher zum Speichern mindestens eines kryptographischen Schlüssels.

Der mindestens eine erste Prozessorkern ist vorgesehen für ein Ausführen mindestens eines nicht sicherheitsrelevanten Programms, beispielsweise für ein Steuern von Funktionen eines Tachographen. Jedoch kann von diesem mindestens einen nicht sicherheitsrelevanten Programm aus über die Prozessorschnittstelle sehr einfach und schnell auf Dienste oder Funktionen zugegriffen werden, die das mindestens eine sicherheitsrelevante Programm, das auf dem mindestens einen zweiten Prozessorkern läuft, zur Verfügung stellt.

Der Vorteil ist, dass durch Vorsehen einer physikalischen und logischen Trennung des mindestens einen ersten und des mindestens einen zweiten Prozessorkerns auf dem Chip diese Prozessorkerne unabhängig voneinander betrieben werden können. Insbesondere können auf dem mindestens einen ersten und dem mindestens einen zweiten Prozessorkern unterschiedliche Betriebssysteme und/oder Programme ausgeführt werden, die unterschiedlichen Sicherheitsanforderungen unterliegen. Durch diese Trennung ist eine hohe Sicherheit möglich. Ferner wird eine gegebenenfalls vorgesehene Sicherheitszertifizierung erheblich vereinfacht, da nur diejenigen Teile des Ein-Chip-Computers und/oder der Programme zertifiziert werden müssen, die den hohen Sicherheitsanforderungen unterliegen, also insbesondere der mindestens eine zweite Prozessorkern mit den diesem zugeordneten Komponenten des Ein-Chip-Computers und/oder das Betriebssystem und/oder das mindestens eine Programm, das auf dem mindestens einen zweiten Prozessorkern ausgeführt werden soll.

Ein weiterer Vorteil ist, dass durch das Ausbilden des mindestens einen ersten und des mindestens einen zweiten Prozessorkerns auf dem gemeinsamen Chip der Ein-Chip-Computer besonders kompakt und kostengünstig ausbildbar ist. Ferner kann ein Datenaustausch zwischen dem mindestens einen ersten und dem mindestens einen zweiten Prozessorkern über die Prozessorschnittstelle sehr schnell erfolgen. Dadurch ist eine hohe Leistungsfähigkeit des Ein-Chip-Computers möglich. Ferner werden durch Vorsehen der internen Prozessorschnittstelle externe Anschlüsse eingespart.

Ferner können auch durch Vorsehen der gemeinsamen Speicherschnittstelle externe Anschlüsse eingespart werden. Dies ermöglicht einen sehr kompakt ausgebildeten Ein-Chip-Computer, der einfach und kostengünstig in einer Schaltungsanordnung nutzbar ist. Ferner kann durch Vorsehen der gemeinsamen Speicherschnittstelle und des gemeinsamen Datenspeichers ein Speicherinhalt des gemeinsamen Datenspeichers sehr einfach durch den mindestens einen zweiten Prozessorkern zum Beispiel auf seine Integrität überprüft werden. Die Prozessorkerne sind vorzugsweise den jeweiligen Anforderungen entsprechend dimensioniert. Durch die parallele und voneinander unabhängige Programmausführung kann der Ein-Chip-Computer besonders leistungsfähig sein.

In einer vorteilhaften Ausgestaltung umfasst der Ein-Chip-Computer mindestens eine erste Peripherieeinheit, die dem mindestens einen ersten Prozessorkern zugeordnet ist, und mindestens eine zweite Peripherieeinheit, die dem mindestens einen zweiten Prozessorkern zugeordnet ist. Die mindestens eine erste und die mindestens eine zweite Peripherieeinheit ist beispielsweise als eine Schnittstelle zu einer externen Einheit oder als eine interne Funktionseinheit oder als ein weiterer Speicher des Ein-Chip-Computers ausgebildet. Die mindestens eine erste und die mindestens eine zweite Peripherieeinheit umfasst beispielsweise einen digitalen und/oder einen analogen Eingang und/oder Ausgang und/oder einen Analog-Digital-Wandler und/oder einen Digital-Analog-Wandler und/oder eine serielle und/oder parallele digitale Schnittstelle und/oder eine Chipkartenschnittstelle und/oder Register und/oder eine Echtzeituhr und/oder eine Zählereinrichtung und/oder eine Zeitsteuereinrichtung und/oder eine Einheit zum Erzeugen oder Erfassen pulsweitenmodulierter Signale. Der Vorteil ist, dass durch Vorsehen der mindestens einen ersten und der mindestens einen zweiten Peripherieeinheit eine hohe Integration möglich ist und dadurch keine entsprechenden externen Baugruppen erforderlich sind. Ferner ist dadurch, dass dem mindestens einen zweiten Prozessorkern die mindestens eine zweite Peripherieeinheit zugeordnet ist, eine hohe Sicherheit möglich.

In einer weiteren vorteilhaften Ausgestaltung umfasst der Ein-Chip-Computer mindestens eine Schutzeinrichtung, die ausgebildet ist, mindestens einen Betriebsparameter des Ein-Chip-Computers und/oder eine mechanische Unversehrtheit des Ein-Chip-Computers zu überwachen. Der Ein-Chip-Computer ist ausgebildet, einen Betrieb des mindestens einen zweiten Prozessorkerns zu unterbinden, wenn durch die mindestens eine Schutzeinrichtung eine Abweichung des mindestens einen Betriebsparameters von einem vorgegebenen Wertebereich des mindestens einen Betriebsparameters erkannt wurde oder eine Verletzung der mechanischen Unversehrtheit des Ein-Chip-Computers erkannt wurde. Der Ein-Chip-Computer ist ferner ausgebildet, einen Betrieb des mindestens einen ersten Prozessorkerns zumindest teilweise aufrecht zu erhalten, wenn der Betrieb des mindestens einen zweiten Prozessorkerns unterbunden ist. Dies hat den Vorteil, dass dadurch eine hohe Sicherheit gegen Manipulation des Ein-Chip-Computers möglich ist. Ferner ist eine hohe Verfügbarkeit des mindestens einen ersten Prozessorkerns möglich, so dass nicht sicherheitsrelevante Anwendungen zumindest in einem Notlaufbetrieb weiter betrieben werden können.

Gemäß einem zweiten Aspekt zeichnet sich die Erfindung aus durch einen Tachographen, der mindestens einen der Ein-Chip-Computer umfasst. Der Vorteil ist, dass ein solcher Tachograph sicher, besonders leistungsfähig und besonders kostengünstig sein kann.

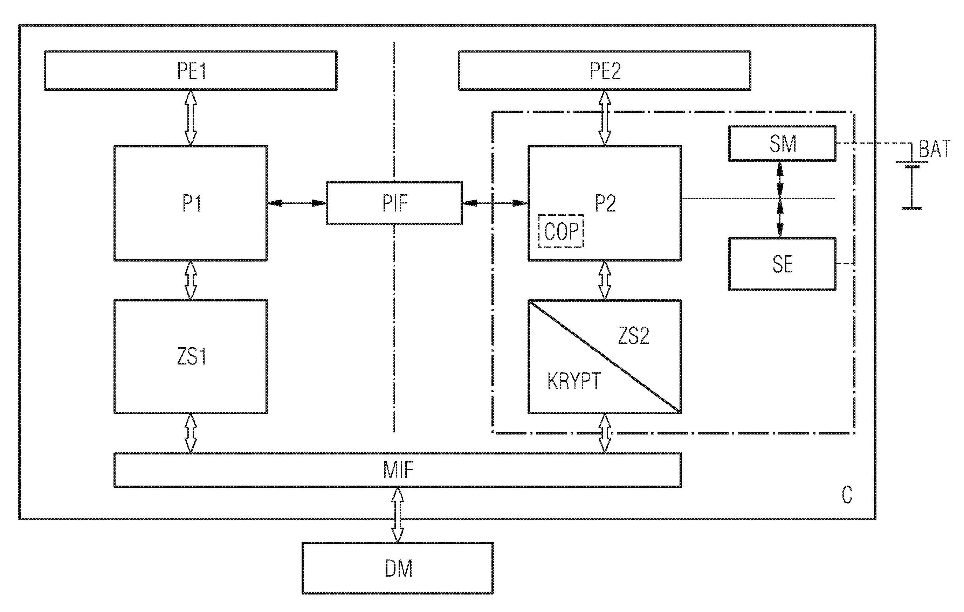

Ausführungsbeispiele der Erfindung sind im Folgenden anhand der schematischen Zeichnung erläutert. Die einzige Figur zeigt einen Tachographen mit einem Ein-Chip-Computer, der durch dessen Chip C repräsentiert ist, einem Datenspeicher DM und einer Energiequelle, die durch eine Batterie BAT repräsentiert ist. Es ist auch möglich, den Datenspeicher DM auf dem Chip C auszubilden.

Der Ein-Chip-Computer umfasst mindestens einen ersten Prozessorkern P1 und mindestens einen zweiten Prozessorkern P2, die über eine Prozessorschnittstelle PIF miteinander gekoppelt sind. Dem mindestens einen zweiten Prozessorkern P2 ist vorzugsweise mindestens ein Koprozessor COP zugeordnet, der ausgebildet ist zum kryptographischen Verarbeiten von Daten, zum Beispiel von Daten, die dem mindestens einen zweiten Prozessorkern P2 über die Prozessorschnittstelle PIF von dem mindestens einen ersten Prozessorkern P1 zugeführt werden. Das kryptographische Verarbeiten umfasst beispielsweise ein Verschlüsseln oder Entschlüsseln von Daten, zum Beispiel mittels DES-, 3DES oder RSA-Algorithmus oder mittels eines anderen Algorithmus, und/oder ein Erzeugen oder Überprüfen einer digitalen Signatur und/oder zum Durchführen einer Authentisierung. Der mindestens eine zweite Prozessorkern P2 kann den mindestens einen Koprozessor COP auch umfassen.

Die Prozessorschnittstelle PIF ist beispielsweise als eine auf dem Chip C integrierte, interne, serielle oder parallele digitale Schnittstelle ausgebildet, die funktionell zwischen dem mindestens einen ersten und dem mindestens einen zweiten Prozessorkern P1, P2 angeordnet ist. Die Prozessorschnittstelle PIF kann jedoch auch als ein gemeinsam nutzbarer Zwischenspeicher ausgebildet sein, der auch als Shared Memory oder als Dual-Port-RAM bezeichnet werden kann.

Dem mindestens einen ersten Prozessorkern P1 ist vorzugsweise mindestens eine erste Peripherieeinheit PE1 und/oder ein erster Zwischenspeicher ZS1, der auch als Cache-Speicher bezeichnet werden kann, zugeordnet. Dem mindestens einen zweiten Prozessorkern P2 ist vorzugsweise mindestens eine zweite Peripherieeinheit PE2 und/oder mindestens ein zweiter Zwischenspeicher ZS2, der auch als Cache-Speicher bezeichnet werden kann, zugeordnet. Dem mindestens einen zweiten Prozessorkern P2 sind ferner eine Verschlüsselungs- und Entschlüsselungseinheit KRYPT, und gegebenenfalls ein sicherer Speicher SM und/oder gegebenenfalls eine Schutzeinrichtung SE zugeordnet. Die mindestens eine erste und die mindestens eine zweite Peripherieeinheit PE1, PE2 ist beispielsweise als eine Schnittstelle zu einer externen Einheit, die nicht auf dem Chip C ausgebildet ist, oder als eine interne Funktionseinheit oder als ein weiterer Speicher des Ein-Chip-Computers ausgebildet. Die mindestens eine erste und die mindestens eine zweite Peripherieeinheit PE1, PE2 umfasst beispielsweise einen digitalen und/oder einen analogen Eingang und/oder Ausgang und/oder einen Analog-Digital-Wandler und/oder einen Digital-Analog-Wandler und/oder eine serielle und/oder parallele digitale Schnittstelle und/oder eine Chipkartenschnittstelle und/oder Register und/oder eine Echtzeituhr und/oder eine Zählereinrichtung und/oder eine Zeitsteuereinrichtung und/oder eine Einheit zum Erzeugen oder Erfassen pulsweitenmodulierter Signale. Die mindestens eine erste und die mindestens eine zweite Peripherieeinheit PE1, PE2 kann jedoch auch anders ausgebildet sein.

Der Ein-Chip-Computer umfasst ferner eine Speicherschnittstelle MIF. Die Speicherschnittstelle MIF umfasst vorzugsweise auch eine Speicherverwaltungseinheit, die beispielsweise ausgebildet ist, Speicherzugriffe zu steuern. Die Speicherschnittstelle MIF ist mit dem externen Datenspeicher DM gekoppelt. Die Speicherschnittstelle MIF ist über den gegebenenfalls vorgesehenen ersten Zwischenspeicher ZS1 mit dem mindestens einen ersten Prozessorkern P1 gekoppelt. Ferner ist die Speicherschnittstelle MIF über die Verschlüsselungs- und Entschlüsselungseinheit KRYPT und den gegebenenfalls vorgesehenen zweiten Zwischenspeicher ZS2 mit dem mindestens einen zweiten Prozessorkern P2 gekoppelt. Der mindestens eine erste Prozessorkern P1 und der mindestens eine zweite Prozessorkern P2 können somit über die gemeinsame Speicherschnittstelle MIF jeweils lesend und/oder schreibend auf den gemeinsamen Datenspeicher DM zugreifen. Durch Vorsehen der gemeinsamen Speicherschnittstelle MIF kann der Ein-Chip-Computer auf einer geringen Chipfläche und mit einer geringen Anzahl an externen Anschlüssen für das Koppeln mit dem Datenspeicher DM ausgebildet werden.

Es ist jedoch ebenso möglich, dem mindestens einen ersten Prozessorkern P1 und dem mindestens einen zweiten Prozessorkern P2 separat voneinander eine jeweilige Speicherschnittstelle und einen jeweiligen Datenspeicher zuzuordnen. Dies ermöglicht einen besonders schnellen Zugriff des jeweiligen Prozessorkerns auf den diesem zugeordneten jeweiligen Datenspeicher.

Vorzugsweise ist mindestens ein Programm auf dem Datenspeicher DM gespeichert. Vorzugsweise ist jeweils für den mindestens einen ersten Prozessorkern P1 und für den mindestens einen zweiten Prozessorkern P2 mindestens ein Programm auf dem Datenspeicher DM gespeichert. Das jeweilige mindestens eine Programm kann auch ein Betriebssystem umfassen. Vorzugsweise ist das mindestens eine Programm des mindestens einen zweiten Prozessorkerns P2 verschlüsselt auf dem Datenspeicher DM gespeichert. Bei einem Lesen des mindestens einen Programms durch den mindestens einen zweiten Prozessorkern wird dieses durch die Verschlüsselungs- und Entschlüsselungseinheit KRYPT entschlüsselt. Das mindestens eine Programm kann jedoch auch in einem vorzugsweise nicht flüchtigen Speicher gespeichert sein, der in dem Chip C ausgebildet ist. Das mindestens eine Programm muss dann gegebenenfalls nicht verschlüsselt gespeichert sein.

In dem Datenspeicher DM sind jedoch auch andere Daten speicherbar, beispielsweise Fahrdaten eines Fahrzeugs, zum Beispiel eine Fahrgeschwindigkeit und eine Fahrzeit des Fahrzeugs. Diese Daten werden vorzugsweise durch den mindestens einen zweiten Prozessorkern P2 oder die Verschlüsselungs- und Entschlüsselungseinheit verschlüsselt und mit Prüfdaten versehen in dem Datenspeicher DM gespeichert. Die Prüfdaten sind beispielsweise als zyklische Redundanzprüfdaten, die durch zyklische Redundanzprüfung prüfbar sind, die auch als Cyclic Redundancy Check oder kurz: CRC bezeichnet werden kann, oder als digitale Signatur ausgebildet. Die Prüfdaten können jedoch auch anders ausgebildet sein.

In dem sicheren Speicher SM, der dem mindestens einen zweiten Prozessorkern P2 zugeordnet ist, ist mindestens ein kryptographischer Schlüssel speicherbar. Der mindestens eine kryptographische Schlüssel wird von dem mindestens einen Prozessorkern P2 oder dessen mindestens einen Koprozessor COP und/oder von der Verschlüsselungs- und Entschlüsselungseinheit KRYPT genutzt für das kryptographische Verarbeiten von Daten. Diese Daten sind dem mindestens einen Prozessorkern P2 beziehungsweise der Verschlüsselungs- und Entschlüsselungseinheit KRYPT über die mindestens eine Prozessorschnittstelle PIF oder über die Speicherschnittstelle MIF zuführbar. Ferner kann auch vorgesehen sein, Daten kryptographisch zu verarbeiten, die dem mindestens einen zweiten Prozessorkern P2 von der mindestens einen zweiten Peripherieeinheit PE2 zugeführt werden. Ferner kann auch das mindestens eine Programm, das auf dem mindestens einen zweiten Prozessorkern P2 ausgeführt werden soll, in dem sicheren Speicher SM gespeichert sein.

Der sichere Speicher SM kann flüchtig oder nicht flüchtig ausgebildet sein. Ist der sichere Speicher SM flüchtig ausgebildet, dann ist vorzugsweise die Batterie BAT vorgesehen, um einen unerwünschten Verlust eines Speicherinhalts, also des mindestens einen kryptographischen Schlüssels und gegebenenfalls des mindestens einen Programms, zu verhindern. Der Vorteil ist, dass der Speicherinhalt aus dem flüchtig ausgebildeten sicheren Speicher SM sehr einfach löschbar ist, beispielsweise zur Gewährleistung der Vertraulichkeit des Speicherinhalts. Ist der sichere Speicher SM nicht flüchtig ausgebildet, dann ist die Batterie BAT nicht erforderlich. Der Vorteil ist, dass der Speicherinhalt des nicht flüchtig ausgebildeten sicheren Speichers SM dauerhaft und zuverlässig vor Verlust geschützt ist. Jedoch müssen gegebenenfalls Maßnahmen getroffen werden, die die Vertraulichkeit des Speicherinhalts gewährleisten.

Die mindestens eine Schutzeinrichtung SE kann vorgesehen sein zum Überwachen mindestens eines Betriebsparameters des Ein-Chip-Computers und/oder einer mechanischen Unversehrtheit des Ein-Chip-Computers. Der mindestens eine Betriebsparameter umfasst beispielsweise eine Betriebsspannung und/oder eine Betriebstemperatur und/oder eine Taktfrequenz des Ein-Chip-Computers. Vorzugsweise ist die mindestens eine Schutzeinrichtung SE ausgebildet zu überprüfen, ob der mindestens einen Betriebsparameter einen vorgegebenen unteren Schwellenwert unterschreitet oder einen vorgegebenen oberen Schwellenwert überschreitet, das heißt einen durch den unteren und den oberen Schwellenwert vorgegebenen Wertebereich des mindestens einen Betriebsparameters verläßt.

Bei hohen Sicherheitsanforderungen umfasst die mindestens eine Schutzeinrichtung SE vorzugsweise ein Schutzgitter oder ähnliches, das beispielsweise als oberste Metallisierungsebene auf dem Chip C ausgebildet ist und das vorzugsweise mindestens den sicheren Speicher SM, den mindestens einen zweiten Prozessorkern P2, die Verschlüsselungs- und Entschlüsselungseinrichtung KRYPT und den gegebenenfalls vorgesehenen zweiten Zwischenspeicher ZS2 abdeckt. Dies ist in der Figur durch einen gestrichelt gezeichneten Rahmen um diese Komponenten des Ein-Chip-Computers angedeutet. Das Schutzgitter kann jedoch auch den gesamten Chip C abdecken. Die mindestens eine Schutzeinrichtung SE ist ausgebildet, eine Beschädigung des Schutzgitters zu erkennen. Dadurch ist eine Verletzung der mechanischen Unversehrtheit des Ein-Chip-Computers erkennbar.

Die mindestens eine Schutzeinrichtung SE kann jedoch auch anders ausgebildet sein.

Der Ein-Chip-Computer ist bevorzugt ausgebildet, abhängig von einem Ergebnis der Überprüfung des mindestens einen Betriebsparameters oder der mechanischen Unversehrtheit des Ein-Chip-Computers Sicherungsmaßnahmen zum Schutz der Vertraulichkeit des Speicherinhalts des sicheren Speichers SM und/oder des Datenspeichers DM durchzuführen. Diese Sicherungsmaßnahmen können beispielsweise das Löschen des Speicherinhalts des sicheren Speichers SM, falls dieser flüchtig ausgebildet ist, und gegebenenfalls des Datenspeichers DM umfassen. Ferner kann vorgesehen sein, nach dem Löschen den Betrieb des mindestens einen zweiten Prozessorkerns P2 zu unterbinden. Der Betrieb des mindestens einen ersten Prozessorkerns P1 wird jedoch vorzugsweise zumindest teilweise aufrecht erhalten, zum Beispiel in Form eines Notbetriebs. In dem Notbetrieb steht die Funktionalität des Ein-Chip-Computers nicht mehr vollständig zur Verfügung. Beispielsweise steht der mindestens eine zweite Prozessorkern P2 nicht mehr für das kryptographische Verarbeiten von Daten zur Verfügung. Programmteile des mindestens einen Programms, das auf dem mindestens einen ersten Prozessorkern P1 läuft, die nicht auf die Funktion des mindestens einen zweiten Prozessorkerns P2 angewiesen sind, können jedoch weiter genutzt werden. Dadurch ist eine hohe Verfügbarkeit des Ein-Chip-Computers möglich, ohne beispielsweise die Vertraulichkeit oder Integrität der verschlüsselt in dem Datenspeicher DM gespeicherten Daten zu gefährden. Beispielsweise kann weiterhin ein Signal der Echtzeituhr erfasst werden, kann weiterhin der Analog-Digital-Wandler betrieben werden und können weiterhin Daten auf der digitalen Schnittstelle, zum Beispiel einem CAN-Bus, ausgegeben werden. Ein Systemausfall innerhalb des Fahrzeugs kann dadurch gegebenenfalls verhindert werden.

Das Vorsehen des mindestens einen ersten und des mindestens einen zweiten Prozessorkerns P1, P2 hat den Vorteil, dass der Ein-Chip-Computer abhängig von den jeweiligen Sicherheitsanforderungen und den jeweiligen Leistungsanforderungen geeignet für die jeweils vorgesehene Anwendung ausgebildet werden kann. Beispielsweise können die Prozessorkerne bezüglich ihrer Rechenleistung unabhängig voneinander dimensioniert werden. Ferner können die Programme unabhängig voneinander und parallel zueinander auf dem mindestens einen ersten und dem mindestens einen zweiten Prozessorkern P1, P2 ausgeführt werden. Dadurch ist der Ein-Chip-Computer besonders leistungsfähig.

Falls eine Sicherheitszertifizierung für den Betrieb des Ein-Chip-Computers erforderlich ist, wie beispielsweise bei Nutzung in dem Tachographen, dann ist ein weiterer Vorteil, dass diese im Allgemeinen nur das mindestens eine Programm betrifft, das auf dem mindestens einen zweiten Prozessorkern P2 und gegebenenfalls auf dessen mindestens einen Koprozessor COP ausgeführt werden soll. Dadurch können erhebliche Kosten eingespart werden, die andernfalls durch die Sicherheitszertifizierung entstehen würden. Ferner muss nur das mindestens eine Programm, das auf dem mindestens einen zweiten Prozessorkern P2 ausgeführt werden soll, verschlüsselt gespeichert und für das Ausführen entschlüsselt werden. Das mindestens eine Programm, das auf dem mindestens einen ersten Prozessorkern P1 ausgeführt werden soll, muss nicht verschlüsselt gespeichert und somit für das Ausführen auch nicht entschlüsselt werden. Dadurch kann Rechenleistung eingespart werden, so dass der Ein-Chip-Computer besonders leistungsfähig ist. Ferner sind so die Sicherheitsanforderungen, beispielsweise nach den Kriterien für die Bewertung der Sicherheit von Informationstechnologie, kurz: ITSEC, einfach und kostengünstig umsetzbar.

Ferner kann der Ein-Chip-Computer besonders kompakt und kostengünstig ausgebildet sein, zum Beispiel durch Vorsehen der gemeinsamen Speicherschnittstelle MIF und/oder durch gemeinsames Nutzen von Ressourcen des Ein-Chip-Computers, beispielsweise einer Energieversorgung, von Signalen oder von Interrupts.

Der Ein-Chip-Computer ist auch in anderen Vorrichtungen und für andere Anwendungen nutzbar.

## Patentansprüche

1. Ein-Chip-Computer,
- der mindestens einen ersten Prozessorkern (P1) und mindestens einen zweiten Prozessorkern (P2) umfasst, die auf einem gemeinsamen Chip (C) ausgebildet sind und die über eine Prozessorschnittstelle (PIF) miteinander gekoppelt sind zum Übertragen von Daten von dem mindestens einen ersten Prozessorkern (P1) zu dem mindestens einen zweiten Prozessorkern (P2) und/oder zum Übertragen von Daten von dem mindestens einen zweiten Prozessorkern (P2) zu dem mindestens einen ersten Prozessorkern (P1),
- der für den mindestens einen ersten Prozessorkern (P1) und den mindestens einen zweiten Prozessorkern (P2) eine gemeinsame Speicherschnittstelle (MIF) umfasst und Daten über die gemeinsame Speicherschnittstelle (MIF) aus einem gemeinsamen Datenspeicher (DM) lesbar und/oder in diesem speicherbar sind und
- der eine Verschlüsselungs- und Entschlüsselungseinheit (KRYPT) umfasst, die dem mindestens einen zweiten Prozessorkern (P2) zugeordnet ist und die so ausgebildet und zwischen dem mindestens einen zweiten Prozessorkern (P2) und der Speicherschnittstelle (MIF) angeordnet ist, dass die Daten, die zwischen dem mindestens einen zweiten Prozessorkern (P2) und dem Datenspeicher (DM) austauschbar sind, durch die Verschlüsselungs- und Entschlüsselungseinheit (KRYPT) verschlüsselbar und entschlüsselbar sind,
- wobei die Speicherschnittstelle (MIF) über einen ersten Zwischenspeicher (ZS1) mit dem mindestens einen ersten Prozessorkern (P1) gekoppelt ist
- und wobei die Speicherschnittstelle (MIF) über die Verschlüsselungs- und Entschlüsselungseinheit (KRYPT) und einen zweiten Zwischenspeicher (ZS2) mit dem mindestens einen zweiten Prozessorkern (P2) gekoppelt ist.

2. Ein-Chip-Computer nach Anspruch 1, der mindestens eine erste Peripherieeinheit (PE1) umfasst, die dem mindestens einen ersten Prozessorkern (P1) zugeordnet ist, und der mindestens eine zweite Peripherieeinheit (PE2) umfasst, die dem mindestens einen zweiten Prozessorkern (P2) zugeordnet ist.

3. Ein-Chip-Computer nach einem der vorstehenden Ansprüche,
- der mindestens eine Schutzeinrichtung (SE) umfasst, die ausgebildet ist, mindestens einen Betriebsparameter des Ein-Chip-Computers und/oder eine mechanische Unversehrtheit des Ein-Chip-Computers zu überwachen,
- der ausgebildet ist, einen Betrieb des mindestens einen zweiten Prozessorkerns (P2) zu unterbinden, wenn durch die mindestens eine Schutzeinrichtung (SE) eine Abweichung des mindestens einen Betriebsparameters von einem vorgegebenen Wertebereich des mindestens einen Betriebsparameters erkannt wurde oder eine Verletzung der mechanischen Unversehrtheit des Ein-Chip-Computers erkannt wurde, und
- der ausgebildet ist, einen Betrieb des mindestens einen ersten Prozessorkerns (P1) zumindest teilweise aufrecht zu erhalten, wenn der Betrieb des mindestens einen zweiten Prozessorkerns (P2) unterbunden ist.

4. Tachograph, der mindestens einen Ein-Chip-Computer nach einem der vorstehenden Ansprüche umfasst.

## Claims

1. Single-chip computer
- which comprises at least one first processor core (P1) and at least one second processor core (P2) which are produced on a shared chip (C) and which are coupled to one another via a processor interface (PIF) for the purpose of transferring data from the at least one first processor core (P1) to the at least one second processor core (P2) and/or for the purpose of transferring data from the at least one second processor core (P2) to the at least one first processor core (P1),
- which comprises a shared memory interface (MIF) for the at least one first processor core (P1) and the at least one second processor core (P2), and data can be read from and/or stored in a shared data memory (DM) via the shared memory interface (MIF), and
- which comprises an encryption and decryption unit (KRYPT) which is associated with the at least one second processor core (P2) and which is designed and arranged between the at least one second processor core (P2) and the memory interface (MIF) such that the data which can be interchanged between the at least one second processor core (P2) and the data memory (DM) can be encrypted and decrypted by the encryption and decryption unit (KRYPT),
- wherein the memory interface (MIF) is coupled to the at least one first processor core (P1) via a first buffer store (ZS1)
- and wherein the memory interface (MIF) is coupled to the at least one second processor core (P2) via the encryption and decryption unit (KRYPT) and a second buffer store (ZS2).

2. Single-chip computer according to Claim 1, which comprises at least one first peripheral unit (PE1), which is associated with the at least one first processor core (P1), and which comprises at least one second peripheral unit (PE2), which is associated with the at least one second processor core (P2).

3. Single-chip computer according to one of the preceding claims,
- which comprises at least one protective device (SE) which is designed to monitor at least one operating parameter of the single-chip computer and/or a mechanical integrity of the single-chip computer,
- which is designed to prevent operation of the at least one second processor core (P2) when the at least one protective device (SE) has recognized a discrepancy between the at least one operating parameter and a prescribed value range of the at least one operating parameter or has recognized an infringement of the mechanical integrity of the single-chip computer, and
- which is designed to at least partially maintain operation of the at least one first processor core (P1) when the operation of the at least one second processor core (P2) is prevented.

4. Tachograph which comprises at least one single-chip computer according to one of the preceding claims.

## Revendications

1. Ordinateur monopuce,
- qui comprend au moins un premier coeur de processeur (P1) et au moins un deuxième coeur de processeur (P2) qui sont conçus sur une puce (C) commune et qui sont couplés l'un à l'autre par l'intermédiaire d'une interface de processeur (PIF) pour la transmission de données de l'au moins un premier coeur de processeur (P1) vers l'au moins un deuxième coeur de processeur (P2) et/ou pour la transmission de données de l'au moins un deuxième coeur de processeur (P2) vers l'au moins un premier coeur de processeur (P1),
- qui pour l'au moins un premier coeur de processeur (P1) et l'au moins un deuxième coeur de processeur (P2) comprend une interface de mémoire (MIF) commune et par l'intermédiaire de l'interface de mémoire (MIF) commune, des données sont lisibles à partir d'une mémoire de données (DM) commune et/ou mémorisables dans cette dernière et
- qui comprend une unité de cryptage et de décryptage (KRYPT) qui est associée à l'au moins un deuxième coeur de processeur (P2) et qui est conçue et placée entre l'au moins un deuxième coeur de processeur (P2) et l'interface de mémoire (MIF), de telle sorte que les données qui sont échangeables entre l'au moins un deuxième coeur de processeur (P2) et la mémoire de données (DM) puissent être cryptées et décryptées par l'unité de cryptage et décryptage (KRYPT),
- l'interface de mémoire (MIF) étant couplée par l'intermédiaire d'une première mémoire intermédiaire (ZS1) avec l'au moins premier coeur de processeur (P1)
- et l'interface de mémoire (MIF) étant couplée avec l'au moins un deuxième coeur de processeur (P2) par l'intermédiaire de l'unité de cryptage et de décryptage (KRYPT) et d'une deuxième mémoire intermédiaire (ZS2).

2. Ordinateur monopuce selon la revendication 1, qui comporte au moins une unité périphérique (PE1) qui est associée à l'au moins un premier coeur de processeur (P1) et qui comporte au moins une deuxième unité périphérique (PE2) qui est associée à l'au moins un deuxième processeur (P2).

3. Ordinateur monopuce selon l'une quelconque des revendications précédentes,
- qui comprend au moins un système de protection (SE) qui est conçu pour superviser au moins un paramètre de service de l'ordinateur monopuce et/ou une intégrité mécanique de l'ordinateur monopuce,
- qui est conçu pour interrompre un fonctionnement de l'au moins un deuxième coeur de processeur (P2) si par l'au moins un système de protection (SE), un écart de l'au moins un paramètre de service par rapport à un ordre de valeurs prédéfini de l'au moins un paramètre de service a été identifié ou une atteinte de l'intégrité mécanique de l'ordinateur monopuce a été identifiée et
- qui est conçu pour maintenir au moins partiellement un fonctionnement de l'au moins un premier coeur de processeur (P1) lorsque le fonctionnement de l'au moins un deuxième coeur de processeur (P2) a été interrompu.

4. Tachygraphe qui comprend au moins un ordinateur monopuce selon l'une quelconque des revendications précédentes.
